(19) **Europäisches Patentamt / European Patent Office / Office européen des brevets**

(11) **EP 4 667 121 A1**

(12) **EUROPEAN PATENT APPLICATION**
published in accordance with Art. 153(4) EPC

(43) Date of publication:
**24.12.2025 Bulletin 2025/52**

(21) Application number: **24784568.8**

(22) Date of filing: **17.01.2024**

(51) International Patent Classification (IPC):
**B05B 16/80** (2018.01)      **B05B 15/00** (2018.01)

(52) Cooperative Patent Classification (CPC):
**B05B 15/00; B05B 16/80**

(86) International application number:
**PCT/JP2024/001175**

(87) International publication number:
**WO 2024/209764 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 JP 2023062706**

(71) Applicant: **Mitsubishi Heavy Industries, Ltd.**
**Tokyo 100-8332 (JP)**

(72) Inventors:
- **SHIBATA, Masaaki**
  **Tokyo 100-8332 (JP)**
- **TAKAYANAGI, Kazufumi**
  **Tokyo 100-8332 (JP)**
- **KOREMATSU, Yasuhiro**
  **Tokyo 100-8332 (JP)**
- **OKANO, Yasushi**
  **Tokyo 100-8332 (JP)**
- **YAMADA, Tomokazu**
  **Tokyo 100-8332 (JP)**

(74) Representative: **Cabinet Beau de Loménie**
**103, rue de Grenelle / CS 90800**
**75340 Paris Cedex 07 (FR)**

(54) **PROTECTIVE LAYER FORMATION APPARATUS**

(57)      The purpose of the present invention is to reduce the occurrence of damage to a duct. This protective layer formation apparatus (100) is for forming a protective layer in a construction area on a front edge part of a tip section in a blade length direction of an FRP-made wind turbine blade body. The protective layer formation apparatus (100) is provided with: a booth (140) that surrounds a portion of the construction area in the blade length direction of the wind turbine blade body; a spraying unit that is disposed inside the booth (140) and forms the protective layer by spraying a construction material to the construction area; a booth moving mechanism that moves the booth (140) in the blade length direction (L1) of the wind turbine blade body; a dust collection device (160) that is disposed apart from the booth (140) and collects dust in the booth (140); and a flexible duct (161) that connects the booth (140) with the dust collection device (160).

FIG. 15

## Description

Technical Field

The present disclosure relates to a protective layer formation apparatus.

Background Art

As a wind turbine rotor rotates, a wind turbine blade collides with foreign substances (for example, raindrops, dust, and the like) in the air and is eroded, so that erosion occurs on a leading edge side of the wind turbine blade. In order to protect the wind turbine blade from the erosion, it is known to form a protective layer for erosion resistance on a leading edge portion of the wind turbine blade (refer to PTL 1).

Citation List

Patent Literature

[PTL 1] Japanese Unexamined Patent Application Publication No. 2022-175830

Summary of Invention

Technical Problem

When a protective layer is formed on a wind turbine blade, dust (for example, a powdery construction material) scatters. Accordingly, in order to suppress the scattering of dust, it is conceivable to surround the wind turbine blade, which is a target for forming the protective layer, with a booth. In a case where the wind turbine blade is surrounded by a booth, dust scattered in the booth remains. In order to remove the dust staying in the booth, it is conceivable to provide a dust collection device that collects the dust. In a case where the dust collection device is disposed outside the booth, it is necessary to provide a pipe, a duct, or the like that connects the booth to the dust collection device, but there is a possibility that the pipe, the duct, or the like may be damaged. In particular, in a case where the booth moves, a load acts on the pipe, the duct, or the like, and accordingly, damage becomes a significant issue.

The present disclosure is made in view of such circumstances, and an object of the present disclosure is to provide a protective layer formation apparatus capable of preventing a duct that connects a dust collection device to a booth from being damaged. Solution to Problem

In order to solve the above-described problem, a protective layer formation apparatus of the present disclosure adopts the following means.

A protective layer formation apparatus according to an aspect of the present disclosure is a protective layer formation apparatus that forms a protective layer in a tip portion in a blade length direction of a wind turbine blade main body formed of FRP and in a construction range of a leading edge portion, and includes a booth that surrounds a part of the construction range of the wind turbine blade main body in the blade length direction, a spray unit that is provided inside the booth and sprays a construction material to the construction range to form the protective layer, a booth movement mechanism that moves the booth in the blade length direction of the wind turbine blade main body, a dust collection device that is provided to be separated from the booth and collects dust in the booth, and a flexible duct that connects the booth to the dust collection device. Advantageous Effects of Invention

According to the present disclosure, it is possible to prevent a duct that connects a dust collection device to a booth from being damaged.

Brief Description of Drawings

Fig. 1 is a schematic configuration view showing a wind power generation device using a wind turbine blade according to an embodiment of the present disclosure.
Fig. 2 is a plan view showing the wind turbine blade.
Fig. 3 is a front view of the wind turbine blade of Fig. 2.
Fig. 4 is a horizontal cross-sectional view of the wind turbine blade shown in Figs. 2 and 3.
Fig. 5 is a front view showing a state of installation of the wind turbine blade when a protective layer is formed.
Fig. 6 is a horizontal cross-sectional view at a support position in Fig. 5.
Fig. 7 is a partially enlarged front view showing a construction range of the protective layer formed at a tip of the wind turbine blade.
Fig. 8 is a partially enlarged front view showing the order of forming the protective layer.
Fig. 9 is a schematic perspective view showing a protective layer formation apparatus of the present embodiment.
Fig. 10 is a partially enlarged horizontal cross-sectional view showing the protective layer formation apparatus of the present embodiment and a forming direction of a protective layer in a blade thickness direction.
Fig. 11 is a view showing an opening provided in a booth of the protective layer formation apparatus of the present embodiment.
Fig. 12 is a schematic perspective view showing the wind turbine blade and the protective layer formation apparatus of the present embodiment.
Fig. 13 is a block diagram showing a control configuration of the protective layer formation apparatus of the present embodiment.
Fig. 14 is a flowchart showing a control method for the protective layer formation apparatus of the present embodiment.

Fig. 15 is a schematic configuration view showing a protective layer formation apparatus of the present embodiment.

Fig. 16 is a perspective view showing a support mechanism provided in the protective layer formation apparatus of the present embodiment.

Fig. 17 is a perspective view showing an arm portion of the present embodiment.

Fig. 18 is a vertical cross-sectional view showing a connection portion of the present embodiment.

Fig. 19 is a schematic vertical cross-sectional view showing a support block member of the present embodiment.

Description of Embodiments

Hereinafter, an embodiment according to the present disclosure will be described with reference to the drawings.

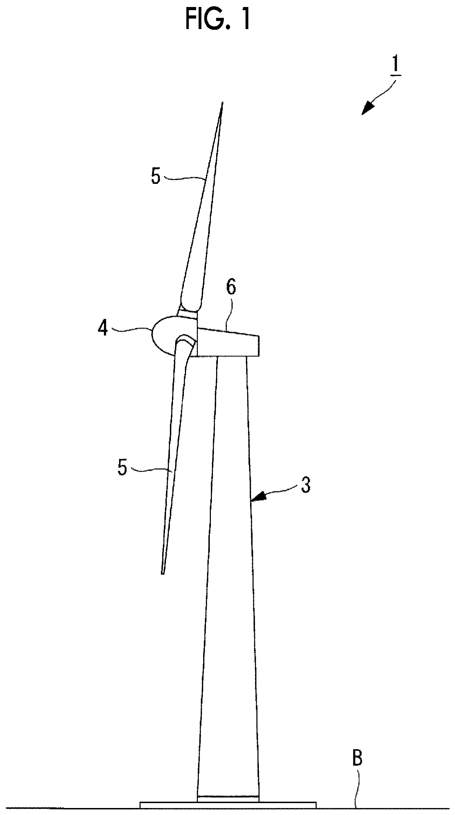

As shown in Fig. 1, a wind power generation device 1 has a tower 3 that is erected on an installation surface B, a nacelle 6 that is installed at an upper end of the tower 3, and a rotor head 4 that is rotatable around a substantially horizontal axis and that is provided in the nacelle 6.

A plurality of (for example, three) wind turbine blades 5 are attached to the rotor head 4 radially around a rotation axis thereof. Thereby, the force of the wind that hits the wind turbine blade 5 in the direction of the rotation axis of the rotor head 4 is changed into power for rotating the rotor head 4 around the rotation axis. The obtained power is converted into electric power by a generator (not shown) and is supplied to the outside.

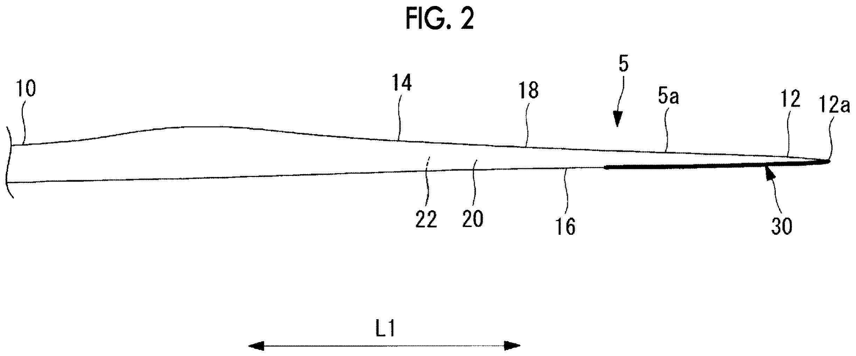

As shown in Fig. 2, the wind turbine blade 5 includes a blade root portion 10 that is attached to the rotor head 4, a blade tip portion (tip portion) 12 that is located farthest from the rotor head 4, and an airfoil portion 14 that extends between the blade root portion 10 and the blade tip portion 12. In Fig. 2, a blade length direction L1 is a horizontal direction.

The wind turbine blade 5 has a leading edge 16 and a trailing edge 18 from the blade root portion 10 to the blade tip portion 12. An outer shape of the wind turbine blade 5 is defined by a pressure-side surface 20 that is a pressure surface (positive pressure surface) and a suction-side surface 22 that is a negative pressure surface facing the pressure-side surface 20. The wind turbine blade 5 is formed of fiber-reinforced plastic (FRP). As the FRP, carbon-fiber-reinforced plastic (CFRP), glass-fiber-reinforced plastic (GFRP), or the like is used. An entire length of the wind turbine blade 5 from the blade root portion 10 to the blade tip portion 12 is 100 m class, for example, greater than or equal to 80 m and less than or equal to 150 m. In addition, a wind turbine blade of 200 m class may be adopted as the wind turbine blade 5 of the present embodiment.

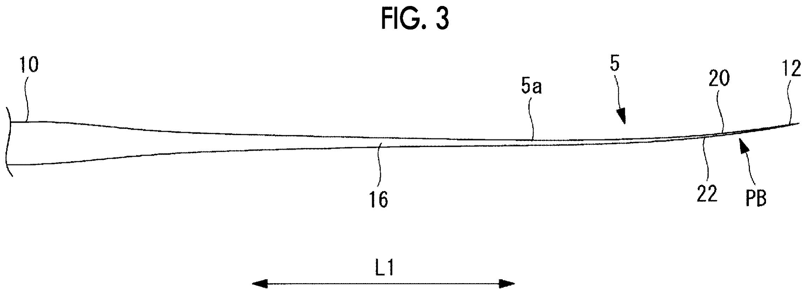

As shown in Fig. 3, the wind turbine blade 5 is provided with a pre-bend PB that is bent in advance on a blade tip portion 12 side. A bending amount of the pre-bend PB is determined in advance on the assumption that the wind turbine blade 5 receives a wind pressure during operation. Therefore, the pre-bend PB is bent such that the pressure-side surface 20 that receives the wind pressure is concave and the suction-side surface 22 is convex.

As shown in Fig. 2, a protective layer 30 is formed with respect to a wind turbine blade main body 5a in the blade tip portion 12 of the wind turbine blade 5 and in a predetermined region (leading edge portion) including the leading edge 16. A construction range of the protective layer 30 is indicated by a thick line in Fig. 2. The construction range of the protective layer 30 in the blade length direction L1 is 20 m to 40 m, preferably about 30 m, from a tip 12a of the blade tip portion 12. The construction range of the protective layer 30 is not limited thereto, and for example, in a region where a circumferential speed exceeds 90 m/s, the construction range is set to a range of approximately one-third of the entire length from the tip of the wind turbine blade 5. The protective layer 30 is made of a material having excellent wear resistance, such as a cermet or a cobalt (CO) alloy such as Co base alloy. The protective layer 30 is formed, for example, by high velocity oxy-fuel (HVOF).

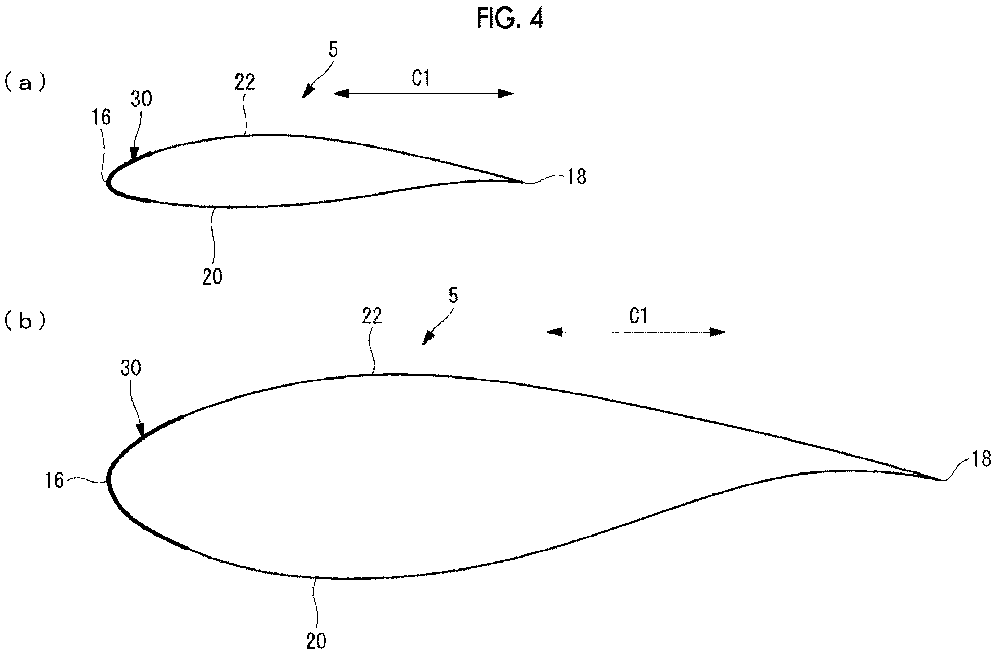

Fig. 4 shows a cross section of the wind turbine blade 5. In the drawing, the horizontal direction indicates a blade chord direction (a chord direction) C1. In a case where the entire length of the wind turbine blade 5 is R, (a) is a cross section at a position of 0.9R, and (b) is a cross section at a position of 0.7R.

The blade chord length (chord length) c in the cross section of (a) of Fig. 4 is about 1 m. A blade thickness ratio t/c in a case where a maximum thickness of the blade thickness is t is 18%.

The blade chord length c in the cross section of (b) of Fig. 4 is about 2 m, and the blade thickness ratio t/c is 25%.

As shown by a thick line in Fig. 4, the protective layer 30 is formed from the pressure-side surface 20 to the suction-side surface 22 with the leading edge 16 interposed therebetween. The construction range of the protective layer 30 is determined in consideration of erosion of the wind turbine blade 5 due to raindrops or the like.

Next, a step of forming the protective layer 30 described above will be described.

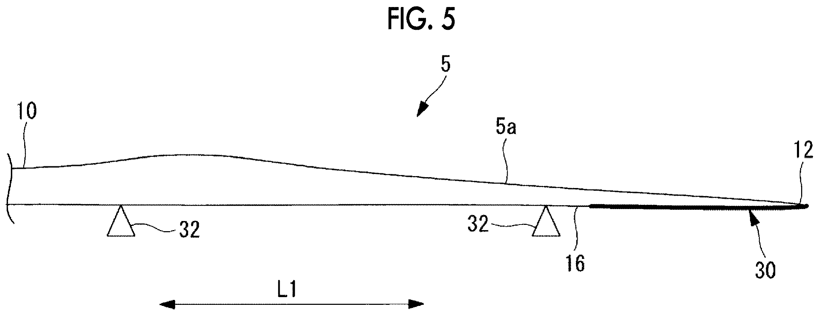

As shown in Fig. 5, after the outer shape of the wind turbine blade main body 5a of the wind turbine blade 5 is molded, the wind turbine blade 5 is installed in a posture in which the blade length direction L1 is substantially horizontal and the leading edge 16 faces downward (posture setting step). That is, the wind turbine blade main body 5a is installed in a vertical posture so that the blade chord direction C1 faces a substantially vertical direction. At this time, the wind turbine blade 5 is supported from below by a plurality of support platforms 32 provided at predetermined intervals in the blade length direction L1 (supporting step).

Fig. 5 shows that a leading edge 16 side of the wind turbine blade 5 is supported by the plurality of support platforms 32. Each support platform 32 is provided on an installation surface BS at the time of construction. The wind turbine blade 5 may be supported with the leading edge 16 side facing downward. For example, instead of the method of supporting the wind turbine blade 5 from below by the support platform 32 described above, the wind turbine blade 5 may be supported by a hanging member such as a wire hung from above the wind turbine blade 5 to hold and lift the leading edge 16 facing downward.

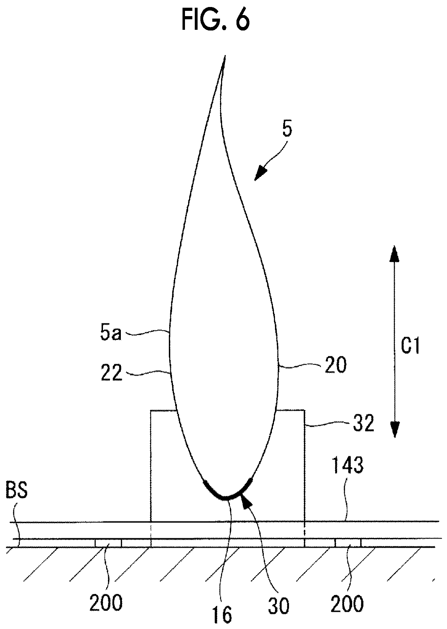

As shown in Figs. 5 and 6, in a state where the leading edge 16 is directed downward, a protective layer 30 is formed on the leading edge 16 of the wind turbine blade 5 by a protective layer formation apparatus 100 (to be described later). The protective layer formation apparatus 100 accelerates the construction material that is heated and melted or softened in a droplet or particle state by a transport gas and sprays the construction material onto the surface of the wind turbine blade main body 5a.

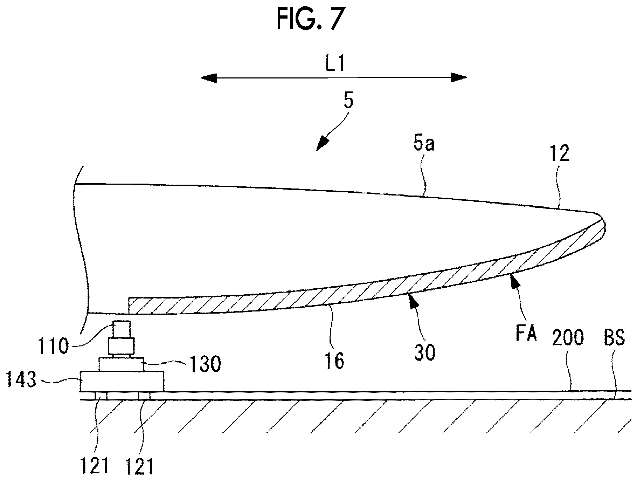

Fig. 7 shows a construction range FA in which the protective layer 30 is formed on the blade tip portion 12 of the wind turbine blade 5. As shown in the drawing, the protective layer 30 is formed in a predetermined range (leading edge portion) on the leading edge 16 side of the wind turbine blade 5.

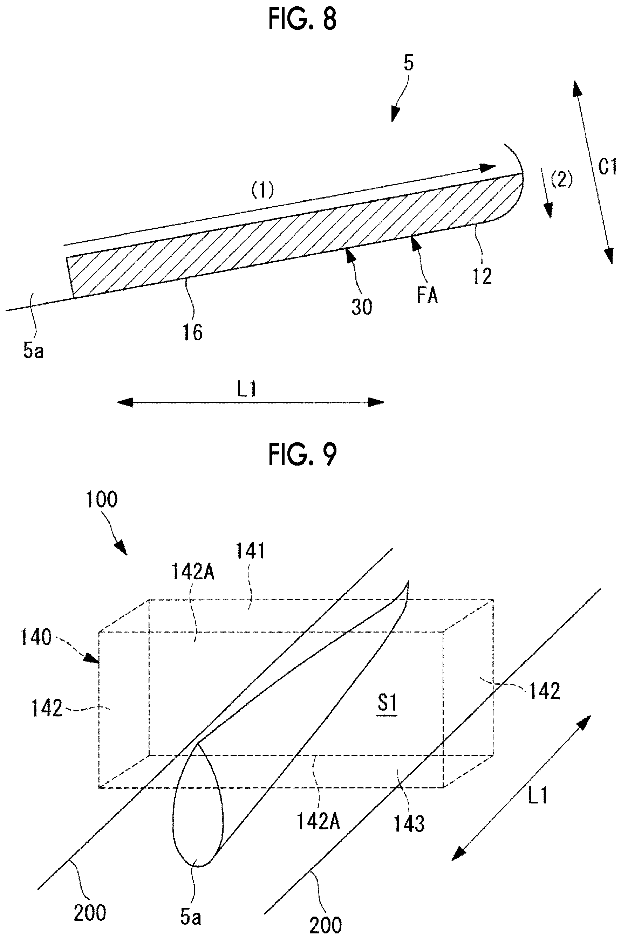

As shown in Figs. 7 and 8, in the spraying work (for example, thermal spraying) when the protective layer 30 is formed, a spray unit 110 is reciprocated in the blade length direction L1 (direction indicated by (1) in the drawing) (first spraying step). Thereby, the protective layers are laminated in a plurality of layers. A thickness of the protective layer 30 is, for example, about 500 $\mu$m to 600 $\mu$m. An irradiation width on the blade surface of the spray unit 110 is, for example, about 10 mm.

After the first spraying step, the position of the spray unit 110 is changed to spray at an adjacent position adjacent to the first spraying step in the blade chord direction C1 (direction shown in (2) in the drawing) (blade chord position changing step). Then, at the adjacent position, the spray unit 110 is reciprocated in the blade chord direction C1 (direction indicated by (1) in the drawing) in the blade length direction L1, and the spraying is performed in the same manner as in the first spraying step (second spraying step). In the first spraying step and the second spraying step, the protective layer 30 is formed by scanning the spray unit 110 to reciprocate in the blade length direction L1. This is because the change in curvature of the blade surface in the blade length direction L1 is smaller than that in the blade chord direction C1.

Fig. 9 is a partially enlarged horizontal cross-sectional view showing the protective layer formation apparatus of the present embodiment and a forming direction of the protective layer in the blade chord direction C1. As shown in Fig. 9, the position change direction in the above-described blade chord position changing step is a direction from one blade surface (for example, the pressure-side surface 20) of the wind turbine blade 5 to the other blade surface (for example, the suction-side surface 22) via the leading edge 16, as indicated by an arrow in the drawing.

Next, the protective layer formation apparatus 100 of the present embodiment will be described with reference to Figs. 9 to 14.

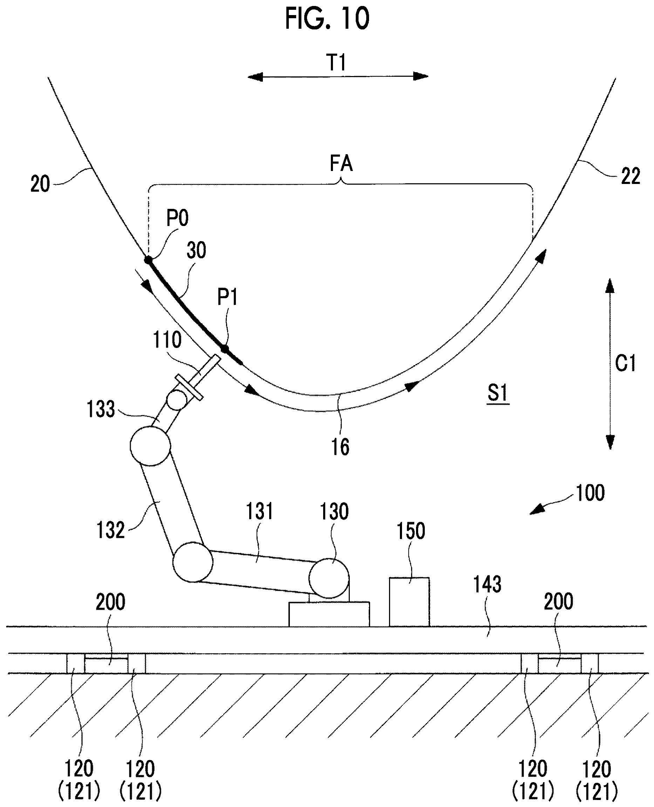

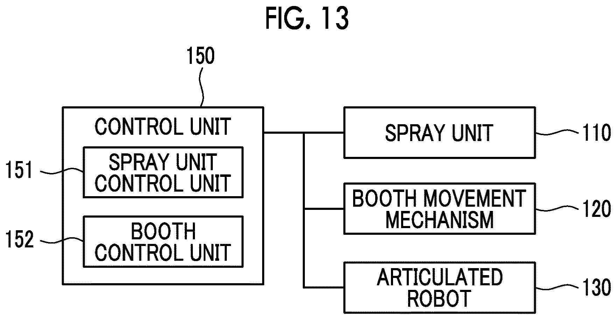

As shown in Figs. 9 and 10, the protective layer formation apparatus 100 is a device that forms the protective layer in the tip portion of the wind turbine blade main body 5a formed of FRP in the blade length direction L1 and in the construction range (FA) of the leading edge portion. Fig. 13 is a block diagram showing a control configuration of the protective layer formation apparatus 100 of the present embodiment.

As shown in Fig. 9, the protective layer formation apparatus 100 includes a booth 140 that moves along a pair of rails 200 and surrounds a part of the wind turbine blade main body 5a. In addition, as shown in Fig. 10, the protective layer formation apparatus 100 includes a spray unit 110 provided inside the booth 140, a booth movement mechanism 120, an articulated robot (spray unit movement mechanism) 130, and a control unit 150.

The spray unit 110 is provided inside the booth 140. The spray unit 110 is a device that sprays the construction material to the construction range FA with the transport gas to form the protective layer. In Fig. 10, the spray unit 110 sprays the construction material toward a spraying target point P1.

The booth movement mechanism 120 is a mechanism that moves the booth 140, which accommodates the spray unit 110 and the articulated robot 130 inside, in the blade length direction L1 (refer to Figs. 9 and the like) of the wind turbine blade main body 5a. The booth movement mechanism 120 moves in the blade length direction L1 along the rail 200 installed on the installation surface BS at the time of construction. The position of the booth movement mechanism 120 in the blade length direction L1 is controlled by the control unit 150.

The booth movement mechanism 120 has a plurality of wheels 121 that engage with the rail 200, a wheel adjustment unit (not shown) that adjusts a rotation speed and a rotation direction of the wheels 121, and a driving source (not shown) that rotationally drives the wheels 121. The wheels 121 are fixed to a lower surface of a bottom surface portion 143 of the booth 140. The adjustment unit is controlled by the control unit 150. The control unit 150 controls the wheel adjustment unit to adjust the movement distance, the movement direction, the movement speed, and the like of the booth 140 in the blade length direction L1.

The articulated robot 130 is a mechanism that is attached to the booth 140 and moves the spray unit 110 to any position in a three-dimensional space. Specifically, the articulated robot 130 moves the spray unit 110 by adjusting angles of arms 131, 132, and 133. As shown in Fig. 10, the articulated robot 130 adjusts the position of the spray unit 110 in the blade thickness direction T1 of the wind turbine blade main body 5a and the orientation of the spray unit 110 such that the construction direction (the direction in which the spray unit 110 sprays the construction material) of the spray unit 110 faces the construction range FA of the wind turbine blade main body 5a.

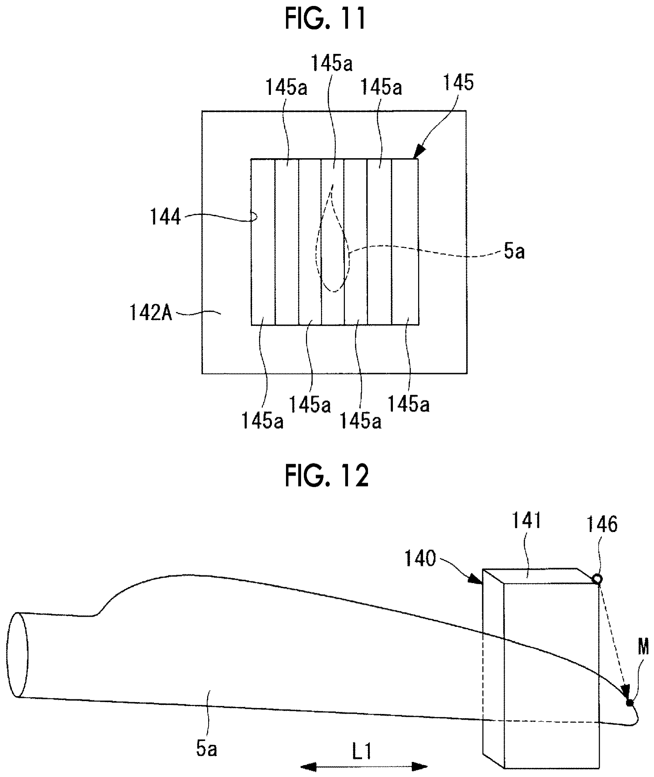

As shown in Figs. 9 and 12, the booth 140 surrounds a part of the wind turbine blade main body 5a in the blade length direction L1. As shown in Fig. 9, the booth 140 partitions a construction space S1 inside. The construction space S1 is substantially sealed.

The booth 140 integrally has a ceiling portion 141 that defines an upper side of the construction space S1, four side wall portions 142 that define a side of the construction space S1, and a bottom surface portion 143 that defines a lower side of the construction space S1. The booth 140 has a rectangular parallelepiped shape.

A length of the booth 140 in the blade length direction L1 is, for example, approximately 5 m.

The ceiling portion 141 is a rectangular plate-shaped member, and an upper end of each side wall portion 142 is connected to the ceiling portion 141.

In addition, as shown in Fig. 10, the bottom surface portion 143 of the booth 140 is a rectangular plate-shaped member, and a lower end of each side wall portions 142 is connected to the bottom surface portion 143. An articulated robot 130 is fixed to an upper surface of the bottom surface portion 143. In addition, the control unit 150 is provided on the upper surface of the bottom surface portion 143 of the booth 140.

An opening 144 through which the wind turbine blade main body 5a is inserted is formed in each of two side wall portions 142A that partition the blade length direction L1, among the four side wall portions 142 as shown in Fig. 11. A closing unit 145 that closes the opening 144 is provided in the opening 144. The closing unit 145 allows the insertion of the wind turbine blade main body 5a and closes a gap formed between the wind turbine blade main body 5a and an edge of the opening 144 as much as possible. For example, as shown in Fig. 11, the closing unit 145 may have a plurality of rubber members 145a extending in the blade chord direction C1, and the plurality of rubber members 145a may be hung to be arranged without a gap along the blade thickness direction T1.

In addition, the closing unit 145 may have a protrusion portion that protrudes from the edge of the opening 144 toward a center portion, like a shutter of a camera, and may close portions other than the center portion of the opening 144 by the protrusion portion.

As shown in Fig. 12, a sensor 146 that detects a plurality of reference marks (detection targets) M provided in the wind turbine blade main body 5a is provided on the ceiling portion 141 of the booth 140. The sensor 146 transmits a detection result to the control unit 150.

The reference mark M is provided at the tip of the wind turbine blade main body 5a. The plurality of (for example, two) reference marks M are provided to be arranged at predetermined intervals in the blade thickness direction T1 (depth direction of the paper surface of Fig. 12). The position where the reference mark M is provided and the number of reference marks M to be provided are not limited to the above description. For example, the reference mark M may be provided at a base end of the wind turbine blade main body 5a. In addition, the number of reference marks M to be provided may be one or may be three or more.

A camera (not shown) that images an irradiation status of the spray unit 110 is provided in the booth 140. The camera transmits a captured image to the control unit 150.

In addition, a dust collection device 160 that collects dust floating in the construction space S1 is provided outside the booth 140.

As shown in Fig. 13, the control unit 150 is a device that controls the spray unit 110, the booth movement mechanism 120, and the articulated robot 130.

The control unit 150 (controller) includes, for example, a central processing unit (CPU, processor), a main memory, a secondary storage (memory), and the like. Further, the control unit 150 may include a communication unit for transmitting and receiving information to and from other devices.

The main memory is configured with, for example, a writable memory such as a cache memory or a random access memory (RAM), and is used as a work region performing reading of an execution program of the CPU, writing of processing data by the execution program, or the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions is stored in the secondary storage in the form of a program, and the CPU reads the program into the main memory and executes a process of processing and calculating information to implement various functions. The program may be applied in various forms, such as being installed in advance in a secondary storage, provided in a state of being stored in a computer readable storage medium, or distributed via communication means using wired or wireless methods. The computer readable storage medium is a magnetic disk, a magneto-optical disk, a CD-ROM, a DVD-ROM, a semiconductor memory, or the like.

The control unit 150 has a spray unit control unit (first control unit) 151 that controls the articulated robot 130 such that a relative position of the spray unit 110 with respect to the wind turbine blade main body 5a is a predetermined position, based on the positions of the plurality of reference marks M detected by the sensor 146, and a booth control unit (second control unit) 152 that controls the booth movement mechanism 120 such that a relative position of the booth 140 with respect to the wind turbine blade main body 5a is a predetermined position, based on the positions of the plurality of reference marks M detected by the sensor 146.

The spray unit control unit 151 determines the position and the posture of the wind turbine blade main body 5a based on the positions of the plurality of reference marks M detected by the sensor 146. In that case, the spray unit control unit 151 may refer to data of the shape of the wind turbine blade main body 5a or the like stored in advance in the storage unit or the like. The spray unit control unit 151 controls the articulated robot 130 such that the relative position of the spray unit 110 with respect to the wind turbine blade main body 5a is a predetermined position, based on the position and the posture of the wind turbine blade main body 5a. The predetermined position is a position where the spray unit 110 can preferably perform a spraying on the wind turbine blade main body 5a, and for example, may be a position facing a target spraying part (a part to which the spray unit 110 performs spraying).

The booth control unit 152 determines the position and the posture of the wind turbine blade main body 5a based on the positions of the plurality of reference marks M detected by the sensor 146. In that case, the booth control unit 152 may refer to data of the shape of the wind turbine blade main body 5a or the like stored in advance in the storage unit or the like. The booth control unit 152 controls the booth movement mechanism 120 such that the relative position of the booth 140 with respect to the wind turbine blade main body 5a is a predetermined position, based on the position and the posture of the wind turbine blade main body 5a. The predetermined position may be, for example, a position where the target spraying part is in the booth 140.

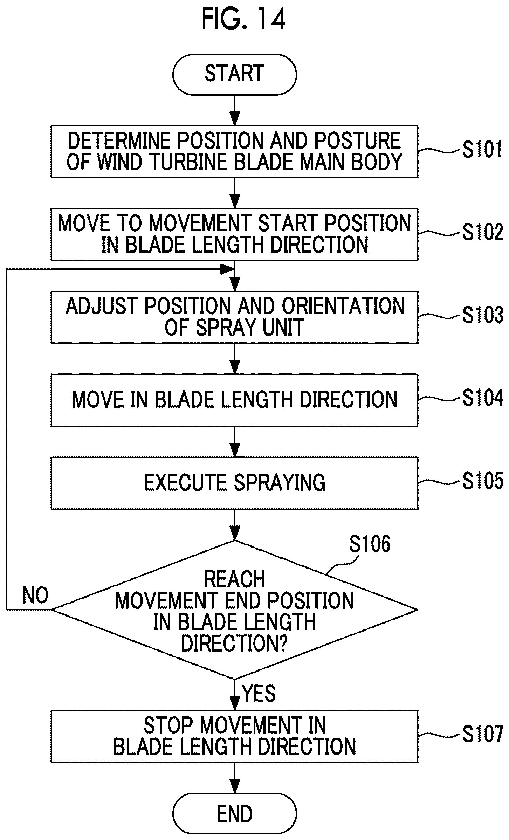

Hereinafter, an example of a process of the protective layer formation apparatus 100 performed by the control unit 150 will be described with reference to Fig. 14. Fig. 14 is a flowchart showing an example of the processing of the protective layer formation apparatus 100 of the present embodiment. Each processing in Fig. 14 is executed by the control unit 150 reading out a program stored in a storage unit (not shown).

In step S101, the control unit 150 determines the position and the posture of the wind turbine blade main body 5a based on the positions of the plurality of reference marks M detected by the sensor 146.

In step S102, the control unit 150 controls the booth movement mechanism 120 to move the protective layer formation apparatus 100 to a movement start position in the blade length direction L1, based on the position and the posture of the wind turbine blade main body 5a determined in step S101 (booth moving step). The movement start position is, for example, a position of an end portion of the construction range FA on a blade root portion 10 side in the blade length direction L1 (position shown in Fig. 7) in a case where the protective layer 30 is formed from the blade root portion 10 side of the construction range FA toward the blade tip portion 12.

In step S103, the control unit 150 controls the articulated robot 130 to adjust the position and the orientation of the spray unit 110 based on the position and the posture of the wind turbine blade main body 5a determined in step S101 (spray unit moving step). The control unit 150 controls the spray unit 110 to be disposed at a desired position in the blade thickness direction T1 and the blade chord direction C1 by adjusting the angles of the arms 131, 132, and 133 shown in Fig. 10. When thermal spraying is started, the control unit 150 controls the articulated robot 130 such that the spray unit 110 is disposed at a position P0 which is the start position in a forming direction.

In addition, the control unit 150 adjusts the orientation of the spray unit 110 of the wind turbine blade main body 5a of the spray unit 110 such that the construction direction of the spray unit 110 faces the construction range FA of the wind turbine blade main body 5a.

In step S104, the control unit 150 controls the booth movement mechanism 120 to move the spray unit 110 in the blade length direction L1.

In step S105, the control unit 150 operates the spray unit 110 to spray the construction material heated and melted or softened in a droplet or particle state onto the surface of the wind turbine blade main body 5a by the transport gas.

The spraying in step S105 is performed simultaneously with the movement of the spray unit 110 in step S104. That is, in steps S104 and S105, a step of moving the spray unit 110 in the blade length direction L1 of the wind turbine blade main body 5a and forming the protective layer 30 by the spray unit 110 is executed.

In step S106, the control unit 150 determines whether the spray unit 110 reaches a movement end position in the blade length direction L1. When the determination is YES, the processing proceeds to step S107, and when the determination is NO, the processing proceeds to step S103.

In step S107, since the spray unit 110 reaches the movement end position in the blade length direction L1, the control unit 150 controls the booth movement mechanism 120 to stop the movement of the spray unit 110 in the blade length direction L1, and ends the processing of the present flowchart.

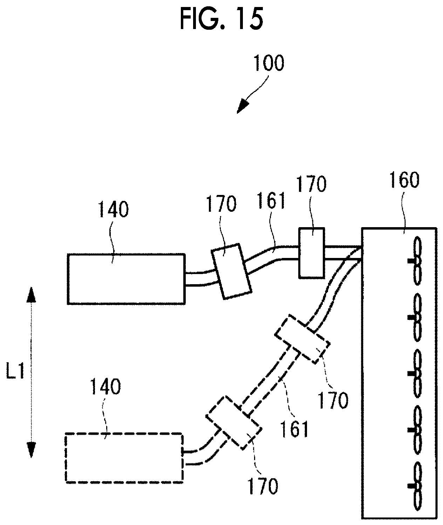

Next, a support mechanism 170 that supports a duct 161 that connects the booth 140 to a dust collection device 160 provided outside the booth 140 will be described with reference to Figs. 15 to 17.

As shown in Fig. 15, the dust collection device 160 is provided outside the booth 140. The dust collection device 160 and the booth 140 are connected to each other by a duct 161. The dust collection device 160 sucks and collects dust floating in the booth 140 through the duct 161.

As shown in Fig. 15, a plurality of (two in the example of Fig. 15) support mechanisms (support portions) 170 are provided along the duct 161. The plurality of support mechanisms 170 are disposed to be separated from each other. Each support mechanism 170 supports the duct 161 from below. Each support mechanism 170 supports a partial portion of the duct 161. Each support mechanism 170 supports the duct 161 and is movable together with the duct 161 according to movement of the booth 140.

Since structures of the respective support mechanisms 170 are identical to each other, one structure will be described below as a substitute.

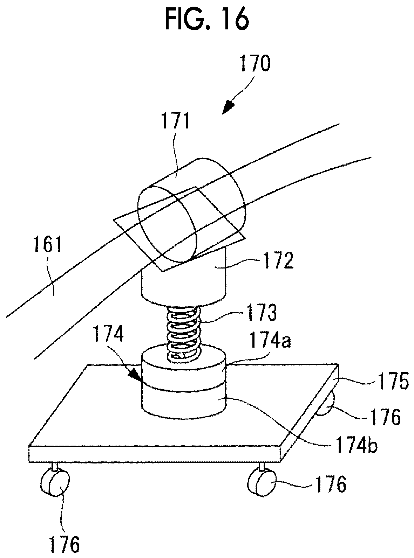

As shown in Fig. 16, the support mechanism 170 is provided on the installation surface BS at the time of construction. The support mechanism 170 has an arm portion (insertion portion) 171 into which the duct 161 is inserted, an insertion support portion 172 that supports the arm portion 171 from below, a spring mechanism (suction portion) 173 that supports the insertion support portion 172 from below and absorbs vibration in an up-down direction, a rotation portion 174 that is provided below the spring mechanism 173 and rotatably supports the spring mechanism 173 and the like, a support plate portion 175 that supports the rotation portion 174 from below, and a plurality (four in the present embodiment) of wheels 176 that are fixed to a lower surface of the support plate portion 175 and come into contact with the installation surface BS at the time of construction.

The arm portion 171 is a cylindrical member centered on a central axis extending in a horizontal direction. The arm portion 171 supports the duct 161 with a margin enough to be movable along the duct 161. That is, an inner diameter of the arm portion 171 is greater than an outer diameter of the duct 161. Specifically, the inner diameter of the arm portion is greater than or equal to the outer diameter of the duct 161 by 10% and is less than or equal to the outer diameter of the duct 161 by 50%.

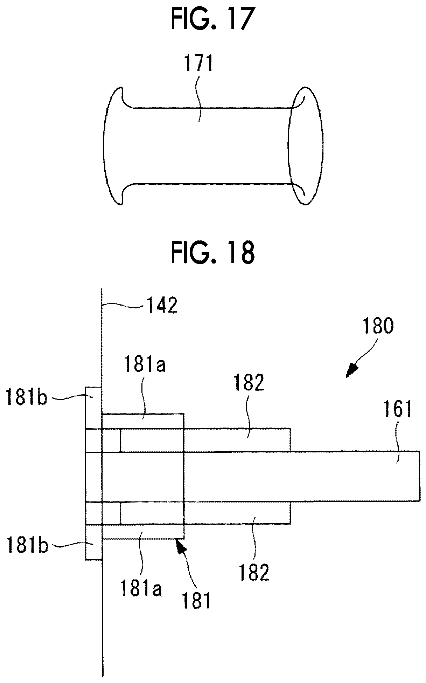

The arm portion 171 may have a straight pipe shape as shown in Fig. 16. In addition, as illustrated in Fig. 17, an end portion of the arm portion 171 in a central axis direction may be expanded. An expanded pipe part may be wound, and an edge portion may face a center direction of the arm portion 171. With such a configuration an edge of the duct 161, which is inserted through the arm portion 171 comes into contact with an edge of the arm portion 171. Therefore, the duct 161 can be less likely to be damaged.

The arm portion 171 is fixed to an upper end portion of the insertion support portion 172.

The spring mechanism 173 is connected to a lower portion of the insertion support portion 172. The spring mechanism 173 is provided to expand and contract in the up-down direction. The spring mechanism 173 absorbs vibration in the up-down direction acting on the insertion support portion 172 and the arm portion 171.

The rotation portion 174 has a rotation upper portion 174a to which the spring mechanism 173 is fixed, and a rotation lower portion 174b that is fixed to the support plate portion 175. The rotation upper portion 174a is rotatably engaged with the rotation lower portion 174b around a central axis extending in the up-down direction.

The support plate portion 175 is a plate-shaped member, and the rotation lower portion 174b is fixed to an upper surface thereof. In addition, a plurality of wheels 176 are attached to a lower surface thereof.

The wheels 176 move the support mechanism 170 by rolling on the installation surface BS at the time of construction. In addition, the wheels 176 are attached to the support plate portion 175 so as to be rotatable around a central axis extending in the up-down direction. Thereby, a direction in which the wheels 176 roll can be changed.

Next, a connection portion 180 provided at a connection part between the booth 140 and the duct 161 will be described with reference to Fig. 18.

The connection portion 180 includes a fixing portion 181 that is fixed to a side wall portion 142 of the booth 140, and a cylindrical portion (tube portion) 182 that is inserted into the fixing portion 181.

The fixing portion 181 integrally has an outer tube portion 181a that is inserted through an opening formed in the side wall portion 142, and a flange portion 181b that extends outward in a radial direction from a base end of the outer tube portion 181a. The fixing portion 181 is formed of a metal material. The material forming the fixing portion 181 is not limited to a metal material. The material forming the fixing portion 181 may be a material with higher rigidity than a material forming the cylindrical portion 182 and the duct 161.

The flange portion 181b is an annular member and is fixed to an inner circumferential surface of the side wall portion 142 of the booth 140. The outer tube portion 181a is erected along an edge of a circular hole formed at the center of the flange portion 181b. The outer tube portion 181a is a cylindrical member extending from one surface of the flange portion 181b. An inner diameter of the outer tube portion 181a is slightly greater than an inner diameter of an outer tube of the cylindrical portion 182.

The cylindrical portion 182 is fixed to the fixing portion 181. The cylindrical portion 182 is inserted into the outer tube portion 181a. The cylindrical portion 182 is fitted to the outer tube portion 181a. The cylindrical portion 182 and the outer tube portion 181a may be fixed by a fastening member such as a bolt. A tip portion of the cylindrical portion 182 protrudes from the outer tube portion 181a.

The duct 161 is inserted through the inside of the cylindrical portion 182. The cylindrical portion 182 is formed of a flexible material (for example, a rubber material or a plastic material such as polyethylene) with higher rigidity than the duct 161.

In addition, the connection portion 180 is also provided at a connection part between the dust collection device 160 and the duct 161.

According to the present embodiment, the following effects are obtained.

In the present embodiment, the dust collection device 160 is provided to be separated from the booth 140. Thereby, the booth 140 can be downsized as compared with a case where the dust collection device 160 is provided inside the booth 140. Therefore, the entire protective layer formation apparatus 100 can be downsized.

In addition, in the present embodiment, the booth 140 and the dust collection device 160 are connected to each other by the flexible duct 161. Thereby, the duct 161 is deformed according to movement of the booth 140. Therefore, since a load generated in the duct 161 can be reduced, the duct 161 can be less likely to be damaged.

Specifically, as shown by a solid line and a dashed line in Fig. 15, when the booth 140 moves along a blade length direction L1, the duct 161 is also deformed. Thereby, since a load on the duct can be reduced, the duct 161 can be less likely to be damaged.

In the present embodiment, the support mechanism 170 that supports the duct 161 and is movable together with the duct 161 according to movement of the booth 140 is provided. Thereby, the duct 161 supported by the support mechanism 170 can be brought into a desired posture. Therefore, the duct 161 is less likely to be connected to the dust collection device 160 and the booth 140 at a steep angle. Thus, the duct 161 can be less likely to be damaged.

Specifically, as shown by a solid line and a dashed line in Fig. 15, when the booth 140 moves along a blade length direction L1, the duct 161 is also deformed. At this time, as the support mechanism 170 supports the duct 161, a positional relationship between the support mechanism 170, the booth 140, and the dust collection device 160 becomes an appropriate positional relationship. The appropriate positional relationship is a positional relationship in which the duct 161 connecting the booth 140 to the dust collection device 160 is not in a state of being bent at a radius less than or equal to an allowable bending radius determined by a material and a shape of the duct 161. Accordingly, the duct 161 can be less likely to be connected to the dust collection device 160 and the booth 140 in a state of being bent at a radius less than or equal to an allowable bending radius. Thus, the duct 161 can be less likely to be damaged.

The allowable bending radius of the duct 161 is determined by a material and a shape of the duct 161, an energizing force of a solid-gas-mixed phase fluid flowing in the duct 161, and the like. In the duct 161 according to the present embodiment, for example, a shear elastic coefficient is greater than or equal to 1 MPa and is less than or equal to 200 MPa. In a case where the shear elastic coefficient of the duct 161 is less than 1 MPa, there is a possibility that the duct 161 can be damaged by use. Meanwhile, in a case where the shear elastic coefficient is greater than 200 MPa, there is a possibility that deformation cannot be suitably performed. In the present embodiment, since the shear elastic coefficient of the duct 161 is greater than or equal to 1 MPa and is less than or equal to 200 MPa, it is possible to suppress damage to the duct 161 and to suitably deform the duct 161.

In the present embodiment, the support mechanism 170 has the arm portion 171 through which the duct 161 is inserted, and the rotation portion 174 that rotatably supports the arm portion 171 around a central axis extending in the up-down direction. Thereby, the duct 161 supported by the support mechanism 170 can be allowed to be bent. Therefore, since the duct 161 is easily bent, the duct 161 can be less likely to be connected to the dust collection device 160 and the booth 140 at a steep angle. Thus, the duct 161 can be less likely to be damaged.

In the present embodiment, the support mechanism 170 has the spring mechanism 173 that absorbs vibration of the duct 161 in the up-down direction. Thereby, for example, even in a case where the duct 161 vibrates in the up-down direction due to a pressure difference or the like, the vibration can be absorbed by a vibration absorbing portion. Therefore, the support mechanism 170 and the duct 161 can be less likely to be damaged.

In the present embodiment, the connection portion 180 having the cylindrical portion 182 fixed to the booth 140 and/or the dust collection device 160 and through which the duct 161 is inserted is provided. In addition, the cylindrical portion 182 is formed of a material with higher rigidity than the duct 161. Thereby, in the connection portion 180 between the booth 140 and/or the dust collection device 160 and the duct 161, a certain degree of bending of the duct 161 is allowed, a sudden bending of the duct 161 can be suppressed. Therefore, the duct 161 can be less likely to be damaged.

The present disclosure is not limited to the above-described embodiments and can be appropriately modified within a scope which does not depart from the gist of the present disclosure.

For example, in the above-described embodiment, an example in which two support mechanisms 170 are provided in the duct 161 is described, but the number of the support mechanisms 170 is not limited thereto. For example, one support mechanism 170 may be provided, or three or more support mechanisms 170 may be provided.

[Modification Example]

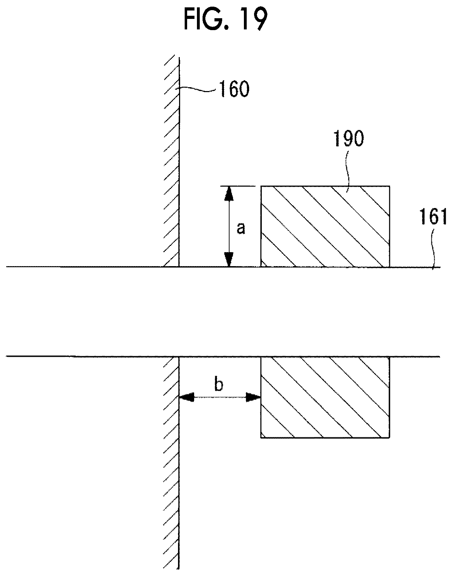

In addition, instead of the support mechanism 170 of the above-described embodiment, a support block member (bending suppression portion) 190 may be provided in the duct 161 as shown in Fig. 19.

The support block member 190 suppresses bending of the duct 161 such that a bending part of the duct 161 does not become less than or equal to an allowable bending radius when the duct 161 is bent. The support block member 190 is, for example, a cylindrical member, and the duct 161 is inserted through the support block member 190. In addition, a length a of the support block member 190 in a direction intersecting an extension direction of the duct 161 is greater than or equal to the allowable bending radius r of the duct 161. That is, following equation (1) is satisfied.

$$a \geq r \quad \cdots \quad (1)$$

wherein, a = length of support block in intersecting direction
r: allowable bending radius of duct

In addition, a separation distance b in an extension direction of the duct 161 between the support block member 190 and the dust collection device 160 is a length shorter than the allowable bending radius r of the duct 161. That is, following equation (2) is satisfied.

$$b < r \quad \cdots \quad (2)$$

wherein, b = separation distance of extension direction of duct between support block member and dust collection device.
r: allowable bending radius of duct

The allowable bending radius of the duct is determined by a material, a shape, and the like of the duct 161.

In addition, in the above-described embodiment, an example in which the support block member 190 is provided in the vicinity of the dust collection device 160 is described, but the present disclosure is not limited thereto. For example, the support block member 190 may be provided in the vicinity of the booth 140.

By providing the support block member 190 in the duct 161, in a case where the duct 161 is bent at a connection part between the duct 161 and the dust collection device 160, the support block member 190 comes into contact with the dust collection device 160 before the duct 161 has a bending radius less than or equal to the allowable bending radius. Thereby, since further bending of the duct 161 is restricted, the duct 161 can be less likely to be connected to the dust collection device 160 in a state of being bent to have a radius less than or equal to the allowable bending radius. Thus, the duct 161 can be less likely to be damaged.

The protective layer formation apparatus described in the above-described embodiment is understood, for example, as follows.

In addition, a protective layer formation apparatus according to a first aspect of the present disclosure is a protective layer formation apparatus (100) that forms a protective layer in a tip portion in a blade length direction of a wind turbine blade main body (5a) formed of FRP and in a construction range (FA) of a leading edge portion, and includes a booth (140) that surrounds a part of the construction range of the wind turbine blade main body in the blade length direction, a spray unit (110) that is provided inside the booth and sprays a construction material to the construction range to form the protective layer, a booth movement mechanism (120) that moves the booth in the blade length direction (L1) of the wind turbine blade main body, a dust collection device (160) that is provided to be separated from the booth and collects dust in the booth, and a flexible duct (161) that connects the booth to the dust collection device.

In the above-described configuration, the dust collection device is provided to be separated from the booth. Thereby, the booth can be downsized as compared with a case where the dust collection device is provided inside the booth. Therefore, the entire protective layer formation apparatus can be downsized.

In addition, in the above-described configuration, the booth and the dust collection device are connected by the flexible duct. Thereby, the duct is deformed according to movement of the booth. Therefore, since stress generated in the duct can be reduced, the duct can be less likely to be damaged.

In addition, a protective layer formation apparatus according to a second aspect of the present disclosure includes the support portion (170) that supports the duct and is movable together with the duct according to movement of the booth, in the above-described first aspect.

The above-described configuration includes the support portion that supports the duct and is movable together with the duct according to movement of the booth. Thereby, it is possible to know that the duct supported by the support portion is in a desired posture. Therefore, the duct can be less likely to be connected to the dust collection device and the booth at a steep angle. Thus, the duct can be less likely to be damaged.

In addition, in a protective layer formation apparatus according to a third aspect of the present disclosure, the support portion has the insertion portion (171) through which the duct is inserted, and the rotation portion (174) that rotatably supports the insertion portion around a central axis extending in an up-down direction, in the above-described second aspect.

In the above-described configuration, the support portion has the insertion portion through which the duct is inserted and the rotation portion that rotatably supports the insertion portion around the central axis extending in the up-down direction. Thereby, the duct supported by the support portion can be allowed to be bent. Therefore, since the duct is easily bent, the duct can be less likely to be connected to the dust collection device and the booth at a steep angle. Thus, the duct can be less likely to be damaged.

In addition, in a protective layer formation apparatus according to a fourth aspect of the present disclosure, the support portion has the vibration absorbing portion (173) that absorbs vibration in an up-down direction of the duct, in the above-described second aspect or third aspect.

In the above-described configuration, the support portion has the vibration absorbing portion that absorbs vibration of the duct in the up-down direction. Thereby, for example, even in a case where the duct vibrates in the up-down direction due to a pressure difference or the like, the vibration can be absorbed by the vibration absorbing portion. Therefore, the support portion and the duct can be less likely to be damaged.

In addition, a protective layer formation apparatus according to a fifth aspect of the present disclosure includes the connection portion (180) provided at a connection part between the booth and/or the dust collection device and the duct, the connection portion has the tube portion (182) that is fixed to the booth and/or the dust collection device and through which the duct is inserted, and the tube portion is formed of a flexible material with higher rigidity than the duct, in any one of the above-described first to fourth aspects.

In the above-described configuration, the connection portion having the tube portion fixed to the booth and/or the dust collection device and through which the duct is inserted is provided. In addition, the tube portion is formed of a material with higher rigidity than the duct. Thereby, in the connection part between the booth and/or the dust collection device and the duct, while a certain degree of bending of the duct is allowed, sudden bending of the duct can be suppressed. Therefore, the duct can be less likely to be damaged.

In addition, a protective layer formation apparatus according to a sixth aspect of the present disclosure includes the bending suppression portion (190) provided in the duct, a distance between the bending suppression portion and the booth or the dust collection device is shorter than an allowable bending radius of the duct, and a length of the bending suppression portion in a direction intersecting an extension direction of the duct is longer than or equal to the allowable bending radius of the duct, in any one of the above-described first to fifth aspects.

In the above-described configuration, in a case where the duct is bent at a connection part between the duct and the booth or the dust collection device, the bending suppression portion and the booth or the dust collection device come into contact with each other before the duct has a bending radius less than or equal to the allowable bending radius. Thereby, since further bending of the duct is restricted, the duct can be less likely to be connected to the booth or the dust collection device in a state of being bent to have a radius less than or equal to the allowable bending radius. Thus, the duct can be less likely to be damaged.

Reference Signs List

1: wind power generation device
3: tower
4: rotor head
5: wind turbine blade
5a: wind turbine blade main body
6: nacelle
10: blade root portion
12: blade tip portion
12a: tip
14: airfoil portion
16: leading edge
18: trailing edge
20: pressure-side surface
22: suction-side surface
30: protective layer
32: support platform
100: protective layer formation apparatus
110: spray unit
120: booth movement mechanism
121: wheel
130: articulated robot
131: arm
132: arm
133: arm
140: booth
141: ceiling portion
142: side wall portion
142A: side wall portion
143: bottom surface portion
144: opening
145: closing unit
145a: member
146: sensor
150: control unit
151: spray unit control unit
152: booth control unit
160: dust collection device
161: duct
170: support mechanism (support portion)
171: arm portion (insertion portion)
172: insertion support portion
173: spring mechanism (vibration absorbing portion)
174: rotation portion
174a: rotation upper portion
174b: rotation lower portion
175: support plate portion
176: wheel
180: connection portion
181: fixing portion (tube portion)
181a: outer tube portion
181b: flange portion
182: cylindrical portion
200: rail
B: installation surface

BS: installation surface at time of construction
C1: blade chord direction
FA: construction range
L1: blade length direction
M: reference mark
PB: pre-bend
S1: construction space
T1: blade thickness direction

**Claims**

1. A protective layer formation apparatus that forms a protective layer in a tip portion in a blade length direction of a wind turbine blade main body formed of FRP and in a construction range of a leading edge portion, the protective layer formation apparatus comprising:

   a booth that surrounds a part of the construction range of the wind turbine blade main body in the blade length direction;
   a spray unit that is provided inside the booth and sprays a construction material to the construction range to form the protective layer;
   a booth movement mechanism that moves the booth in the blade length direction of the wind turbine blade main body;
   a dust collection device that is provided to be separated from the booth and collects dust in the booth; and
   a flexible duct that connects the booth to the dust collection device.

2. The protective layer formation apparatus according to claim 1, further comprising:
   a support portion that supports the duct and is movable together with the duct according to the movement of the booth.

3. The protective layer formation apparatus according to claim 2, wherein the support portion has an insertion portion through which the duct is inserted, and a rotation portion that rotatably supports the insertion portion around a central axis extending in an up-down direction.

4. The protective layer formation apparatus according to claim 2, wherein the support portion has a vibration absorbing portion that absorbs vibration of the duct in an up-down direction.

5. The protective layer formation apparatus according to claim 1, further comprising:

   a connection portion that is provided at a connection part between the booth and/or the dust collection device and the duct,
   wherein the connection portion has a tube portion that is fixed to the booth and/or the dust collection device and through which the duct is inserted, and
   the tube portion is formed of a flexible material with higher rigidity than the duct.

6. The protective layer formation apparatus according to claim 1, further comprising:

   a bending suppression portion provided in the duct,
   wherein a distance between the bending suppression portion and the booth or the dust collection device is shorter than an allowable bending radius of the duct, and
   a length of the bending suppression portion in a direction intersecting an extension direction of the duct is greater than or equal to the allowable bending radius of the duct.

# FIG. 1

# FIG. 2

EP 4 667 121 A1

FIG. 3

# FIG. 4

(a)

(b)

EP 4 667 121 A1

FIG. 5

EP 4 667 121 A1

## FIG. 6

## FIG. 7

## FIG. 8

## FIG. 9

FIG. 10

## FIG. 11

## FIG. 12

## FIG. 13

# FIG. 14

START

DETERMINE POSITION AND POSTURE OF WIND TURBINE BLADE MAIN BODY — S101

MOVE TO MOVEMENT START POSITION IN BLADE LENGTH DIRECTION — S102

ADJUST POSITION AND ORIENTATION OF SPRAY UNIT — S103

MOVE IN BLADE LENGTH DIRECTION — S104

EXECUTE SPRAYING — S105

REACH MOVEMENT END POSITION IN BLADE LENGTH DIRECTION? — S106

NO

YES

STOP MOVEMENT IN BLADE LENGTH DIRECTION — S107

END

FIG. 15

FIG. 16

FIG. 17

171

FIG. 18

142

180

181a

181b

182

161

181b

181a

181

182

# FIG. 19

## INTERNATIONAL SEARCH REPORT

| International application No. |
|---|
| **PCT/JP2024/001175** |

| A. | CLASSIFICATION OF SUBJECT MATTER |
|---|---|

*B05B 16/80*(2018.01)i; *B05B 15/00*(2018.01)i
FI:  B05B16/80; B05B15/00

According to International Patent Classification (IPC) or to both national classification and IPC

| B. | FIELDS SEARCHED |
|---|---|

Minimum documentation searched (classification system followed by classification symbols)

B05B16/80; B05B15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-84217 A (MITSUBISHI HEAVY IND., LTD.) 04 June 2020 (2020-06-04) entire text | 1-6 |
| A | JP 2014-133908 A (KURIMOTO LTD.) 24 July 2014 (2014-07-24) entire text | 1-6 |
| A | JP 2006-75876 A (KOKEN LTD.) 23 March 2006 (2006-03-23) entire text | 1-6 |
| A | JP 2008-510616 A (THE BOEING COMPANY) 10 April 2008 (2008-04-10) entire text | 1-6 |
| A | US 2016/0046088 A1 (LM WP PATENT HOLDING A/S) 18 February 2016 (2016-02-18) entire text | 1-6 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/001175**

| Patent document cited in search report | | | Publication date (day/month/year) | Patent family member(s) | | | Publication date (day/month/year) |
|---|---|---|---|---|---|---|---|
| JP | 2020-84217 | A | 04 June 2020 | US | 2020/0158078 | A1 | |
| | | | | US | 2023/0003187 | A1 | |
| | | | | EP | 3653748 | A1 | |
| | | | | TW | 202024362 | A | |
| | | | | DK | 3653748 | T | |
| JP | 2014-133908 | A | 24 July 2014 | (Family: none) | | | |
| JP | 2006-75876 | A | 23 March 2006 | (Family: none) | | | |
| JP | 2008-510616 | A | 10 April 2008 | US | 2006/0044376 | A1 | |
| | | | | whole document | | | |
| | | | | US | 2008/0152807 | A1 | |
| | | | | WO | 2006/026240 | A1 | |
| | | | | EP | 1784262 | A1 | |
| | | | | EP | 1987889 | A1 | |
| | | | | AT | 404296 | T | |
| US | 2016/0046088 | A1 | 18 February 2016 | WO | 2014/170232 | A1 | |
| | | | | whole document | | | |
| | | | | EP | 2986441 | A1 | |
| | | | | CN | 105283303 | A | |

Form PCT/ISA/210 (patent family annex) (July 2022)

**EP 4 667 121 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022175830 A